# EUROPEAN PATENT SPECIFICATION

(11) **EP 3 604 700 B1**
(45) Date of publication and mention of the grant of the patent: **20.07.2022**
(21) Application number: 18193036.3
(22) Date of filing: 06.09.2018
(51) Int. Cl.: E03C 1/284

(54) **ONE-PIECE P-TRAP AND MANUFACTURING PROCESS THEREOF**
EINSTUECKIGES SIPHON UND VERFAHREN ZUM HERSTELLEN EINES EINSTUECKIGEN SIPHONS
SIPHON MONOBLOC ET METHODE DE FABRICATION

(30) Priority: 01.08.2018 CN 201810859592
(43) Date of publication of application: 05.02.2020
(73) Proprietor: Ningbo Zhuomin Piping & Sanitary Ware Co., Ltd., Yuyao, Zhejiang (CN)
(72) Inventor: Zhao, Zhou, Yuyao, Zhejiang (CN)
(74) Representative: Franco Martegani S.r.l.

(56) References cited:
- AT-U1- 12 144
- US-A- 766 764
- US-A- 789 752
- US-A- 1 916 911
- US-A- 4 081 190
- US-A1- 2014 138 943
- US-A1- 2015 136 267
- US-B1- 7 941 878

## Description

### FIELD OF INVENTION

The present invention relates to the field of indoor sewer pipes, in particular to a one-piece P-trap and its manufacturing process.

### BACKGROUND OF INVENTION

### 1. Description of the Related Art

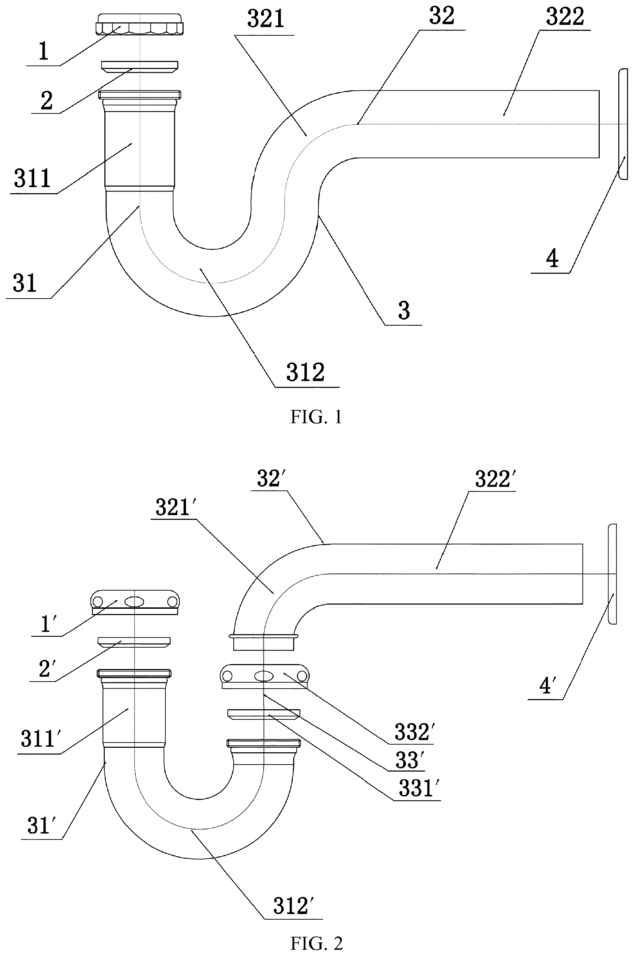

P-trap is a drainage device generally used in an indoor sewer pipe. In FIG. 2, a conventional P-trap comprises a connecting nut 1', a sealing washer 2', a main body 3' and a decorative cover 4', wherein the main body 3' includes a front body 31', a rear body 32' and a connecting member 33'; the front body 31' includes a vertical tube 311' and an obtuse angle elbow 312' integrally connected to one another, and the vertical tube 311' and the obtuse angle elbow 312' are intersected at a junction; the rear body 32' includes an acute angle elbow 321' and a level tube 322' integrally connected to one another, and the acute angle elbow 321' and the level tube 322' are intersected at a junction; the obtuse angle elbow 312' and the acute angle elbow 321' are fixed and connected by a connecting member 33'; and the connecting member 33' includes a second sealing washer 331' and a second connecting nut 332'. During the production of the conventional P-trap, the structure of the conventional P-trap not just makes the manufacturing process cumbersome and consumes much labor resources only, but also requires a relatively difficult assembling process for use.

In a fast growing society, a wide variety of sewer pipes is available in the market for consumer choice, but so many choices give rise to a problem of diversified installations. Since the conventional P-trap products generally come with a complicated structure, users cannot complete the installation independently and usually require professional plumbers for the installations. As the wages of the labor force becomes increasingly higher, the high labor cost is unacceptable by users and end users prefer a product that can be installed independently. US766764A relates to improvements made in traps for waste-pipes and sew-pipes that have a curved body or depressed portion adapted to retain a body of water for a water seal. US789752A relates to a leaden or soft-metal trap exclusively on which it has always been customary to make a solder-joint in connecting the inlet end to the coupling that attaches to the basin and a solder-joint in connecting the outlet end to the waste-pipe. US7941878B discloses a drain plug, a drain body and a drain pipe being fabricated of a flexible material. The drain plug has perforations and is threaded to allow easy cleaning. A drain-trap-shaped drain pipe containment device is in the form of a pair of mirror image halves with a hinge means there between. The hinged halves are latched together. US2014138943A1 discloses a "tee" coupling for use with a no-hub cast iron "P-trap"; the tee is directionally rotatable on the a step engaging the standpipe end of the trap. Two interchangeable gasketed ends are provided for securing the coupling in line with the trap. A rigid band for reinforcing the tee fitting is embedded in the walls of the coupling between the two gasketed ends and the coupling is reinforced with an external metal sheath. Paired pipe clamps on each end of the coupling are tightened around the sheath to seal the gaskets to the pipe ends after the "tee" is "aimed" in the desired direction for laying the primer line. AT12144U1 relates to a siphon with a torus, preferably a cylinder, in the area of the odor barrier. US2015136267A1 discloses a drain hose assembly which comprises an articulated extendable flexible hose having a plurality of articulating sections, the flexible hose further includes a first end configured to couple to a sink drain, a U-bend pipe integrally coupled to a second end of the articulated extendable flexible hose configured to couple to a drain pipe, and a first slip nut fastener operable to securely fasten the first end to the sink drain, and a second slip nut fastener operable to securely fasten the second end to the drain pipe. US4081190A discloses a process and device for connecting a sink tailpiece to a trap out of alignment therewith. The device has an upper section, a lower rigid section capable of being cut with a hacksaw, and a flexible pleated section. US1916911A discloses plumbing fixtures and particularly discloses drain traps for sinks.

Therefore, more and more users want to have a quick do-it-yourself (DIY) installation and a simple installation method capable of installing the product simply by looking at the product itself.

### 2. Summary of the Invention

### Problem to be Solved

It is a primary objective of the present invention to provide a one-piece P-trap to simplify the components and structure of the P-trap and facilitate the installation of the P-trap. In addition, the invention also reduces the steps of the manufacturing process and saves the packaging flow effectively to improve the production efficiency of the product significantly.

### Technical Solution

To achieve the aforementioned objective, the present invention provides a manufacturing process for a one-piece P-trap comprising: a front body and a rear body integrally coupled to one another; the front body comprising a vertical tube and an obtuse angle elbow integrally coupled to one another, and the vertical tube and the obtuse angle elbow being intersected at a junction; the rear body comprising an acute angle elbow and a level tube, and the acute angle elbow and level tube being intersected at a junction; the obtuse angle elbow and the acute angle elbow being intersected at a junction; the front body and the rear body constituting a whole main body; and the main body having a water inlet disposed at the top of the vertical tube and a water outlet disposed at an end of the level tube.

Wherein, the one-piece P-trap further comprises a connecting nut and a sealing washer; the sealing washer is matched and installed between the connecting nut and the top of the vertical tube, and the connecting nut is matched and coupled to the top of the vertical tube through a thread structure.

Wherein, the obtuse angle elbow (312) has a bending angle α, and 135° ≤ α ≤ 180°; and the acute angle elbow (321) has a bending angle β, and 45° ≤ β ≤ 90°
Wherein, *α*=*β*+90°.
Wherein, *α*=180°, and *β*=90°.
Wherein, the bending angle of the obtuse angle elbow and the bending angle of the acute angle elbow are disposed on the same plane.
Wherein, the one-piece P-trap further comprises a decorative cover coaxially matched and sheathed on the level tube.
Wherein, the main body is made of a metal material.
Wherein, the main body is made of a plastic material.

A manufacturing process of a one-piece P-trap with a main body made of a metal material and manufactured by the process comprising the following steps:
(a) Prepare a metal pipe with a sectional dimension corresponding to the main body, and cut a section of the metal pipe required for manufacturing the main body and used as the material of the main body.
(b) Use the material of the main body of the step (a) for annealing.
(c) Anneal a water outlet made of the material of the main body for milling after annealing.
(d) Bend the material of the main body to an angle *α* after the step (c) takes place to form a structure of an obtuse angle elbow, and then bend the material of the main body to an angle *β* to form a structure of an acute angle elbow while forming a structure of an level tube.
(f) Expand an opening of a water inlet made of the material of the main body after the step (d), and then shrink the opening of the water inlet, and mill the water inlet, and finally rivet the water inlet to form a structure of a vertical tube.

### Beneficial Effect

Compared with the prior art, the P-trap of the present invention adopts a main body with a one-piece structure, thus not just simplifying the manufacturing process and saving the packaging flow only, but also improving the production efficiency significantly. Therefore, the invention has the features of simple structure and easy and convenient installation, and meets users DIY requirements.

### BRIEF DESCRIPTION OF THE FIGURES

FIG. 1 is a schematic view of a one-piece P-trap resulting from the present invention;
FIG. 2 is a schematic view of a conventional P-trap;
FIG. 3 is a flow chart of a manufacturing process of a one-piece P-trap in accordance with the present invention;
FIG. 4 is a flow chart of a manufacturing process of a conventional P-trap;
FIG. 5 is a flow chart of packaging a one-piece P-trap in accordance with the present invention;
FIG. 6 is a flow chart of packaging a conventional P-trap;
FIG. 7 is a flow chart of installing a one-piece P-trap in accordance with the present invention.
FIG. 8 is a flow chart of installing a conventional P-trap.

Description of Numerals in the drawings: 1, connecting nut; 2, sealing washer; 3, main body; 4, decorative cover; 31, front body; 32, rear body; 311, vertical tube; 312, obtuse angle elbow; 321, acute angle elbow; 322, level tube; 1', connecting nut; 2', sealing washer; 3', main body; 4', decorative cover; 31', front body; 32', rear body; 33', connecting member; 311', vertical tube; 312', obtuse angle elbow; 321', acute angle elbow; 322', level tube; 331', second sealing washer; 332', second connecting nut.

### DESCRIPTION OF THE PREFERRED EMBODIMENTS

To make it easier for our examiner to understand the objective, technical characteristics, structure, innovative features, and performance of the invention, we use preferred embodiments together with the attached figures for the detailed description of the invention. It is intended that the embodiments and figures disclosed herein are to be considered illustrative rather than restrictive.

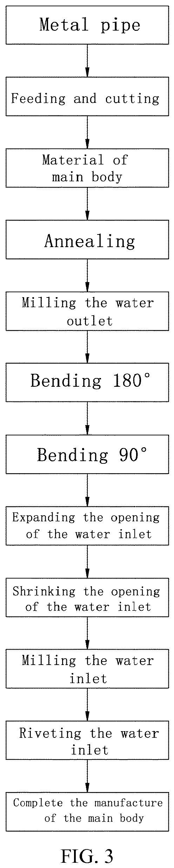

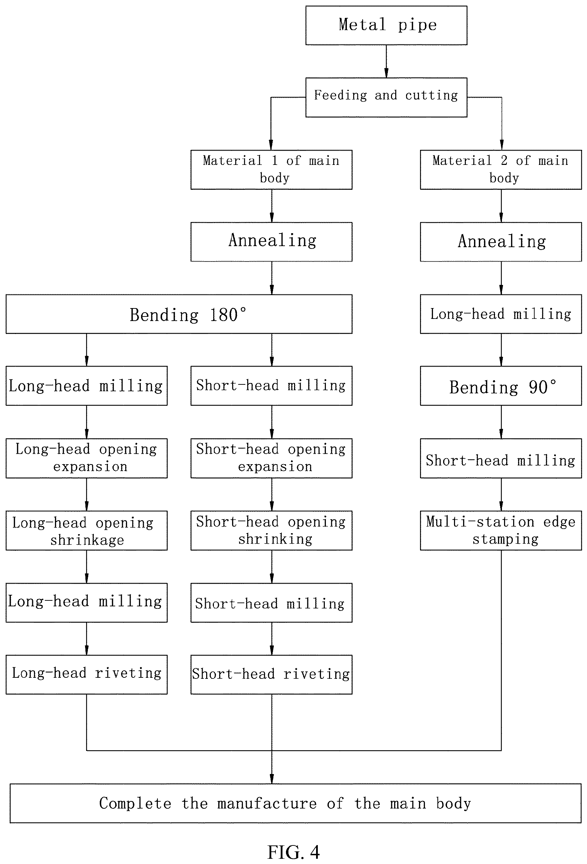

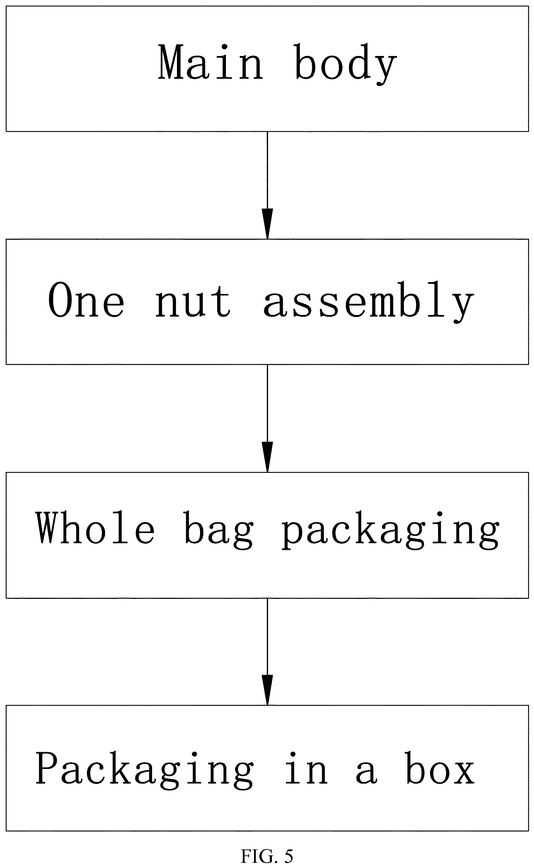

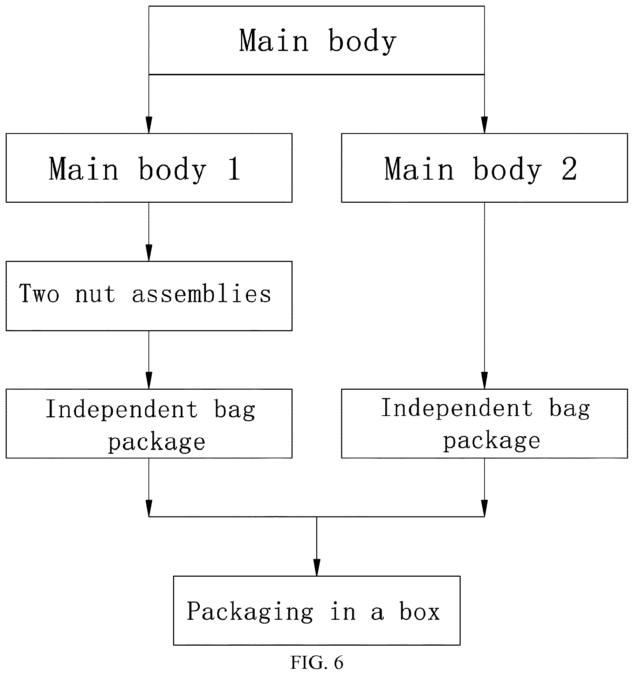

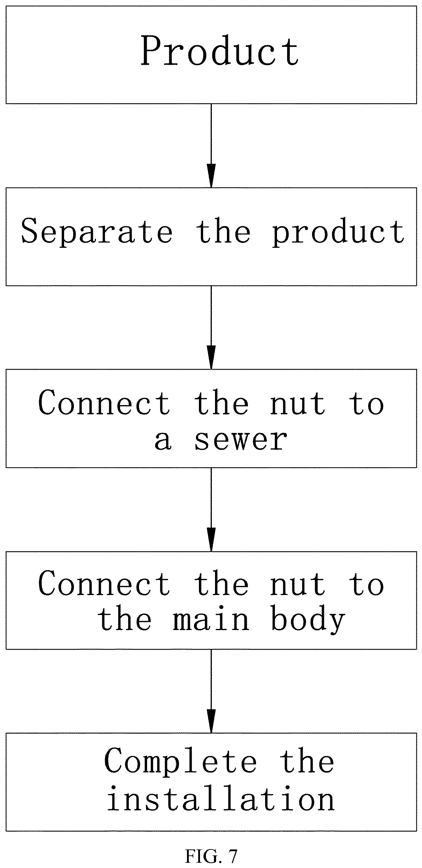

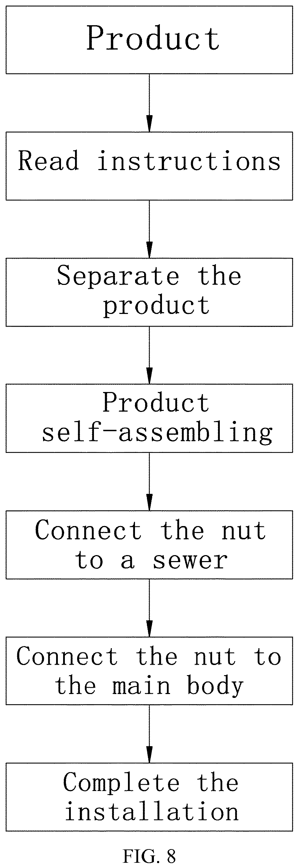

With reference to FIG. 1 for a schematic view of a one-piece P-trap in accordance with the present invention, the one-piece P-trap is comprised of a connecting nut 1, a sealing washer 2, a main body 3 and a decorative cover 4, characterized in that the main body 3 is comprised of a vertical tube 311, an obtuse angle elbow 312, an acute angle elbow 321 and a level tube 322. With reference to FIG. 2 for a schematic view of a conventional P-trap, the conventional P-trap is comprised of a connecting nut 1', a sealing washer 2', a main body 3' and a decorative cover 4', and the main body 3' has a front body 31' and a rear body 32' which is fixed and connected by a connecting member 33'. FIG. 3 shows a flow chart of a manufacturing process of a one-piece P-trap in accordance with the present invention; FIG. 4 shows a flow chart of a manufacturing process of a conventional P-trap; FIG. 5 shows a flow chart of packaging a one-piece P-trap of the present invention; FIG. 6 shows a flow chart of packaging a conventional P-trap; FIG. 7 shows a flow chart of installing a one-piece P-trap of the present invention; and FIG. 8 shows a flow chart of installing a conventional P-trap.

In FIG. 1, the one-piece P-trap of the present invention comprises connecting nut 1, a sealing washer 2 and a main body 3. The main body 3 includes a front body 31 and a rear body 32 integrally coupled to one another. The front body 31 includes a vertical tube 311 and an obtuse angle elbow 312 integrally coupled to one another, and the vertical tube 311 and the obtuse angle elbow 312 are intersected at a junction. The rear body 32 includes an acute angle elbow 321 and a level tube 322 integrally coupled to one another, and the acute angle elbow 321 and the level tube 322 are intersected at a junction. The obtuse angle elbow 312 and the acute angle elbow 321 are intersected at a junction. The sealing washer 2 is matched and installed between the connecting nut 1 and the top of the vertical tube 311, and the connecting nut 1 and the top of the vertical tube 311 are matched and coupled to one another through a thread structure. The P-trap main body of the present invention adopts a one-piece structure. Compared with the conventional P-trap, the invention not just simplifies the manufacturing process significantly only, but also saves the packaging flow to effectively improve the production efficiency. The invention has the features of reduced components, simple structure and easy and convenient assembling, and also meets the user's DIY requirements. Wherein, the main body 3 has a water inlet disposed at the top of the vertical tube 311 and a water outlet disposed at an end of the level tube 322.

In this embodiment as shown in FIG. 1, the obtuse angle elbow 312 has a bending angle *α*, and 135° ≤ *α* ≤ 180°; and the acute angle elbow 321 has a bending angle *β*, and 45° ≤ *β* ≤ 90°.

In this embodiment, *α*=*β*+90°.

In this embodiment, *α*=180°, *β*=90°.

In this embodiment, the bending angle of the obtuse angle elbow 312 and the bending angle of the acute angle elbow 321 are disposed on the same plane.

In this embodiment as shown in FIG. 1, the one-piece P-trap further comprises a decorative cover 4 coaxially matched and sheathed on the level tube 322.

In this embodiment, main body 3 is made of a metal material.

Wherein, the main body 3 may be made of copper with good cold forming property, high corrosion resistance, and high stability, and thus is applicable for the use in various different environments. The main body 3 may be made of aluminum with good mechanical plasticity, high strength, and excellent corrosion resistance. The main body 3 may also be made of stainless steel with high temperature resistance, low temperature resistance, good corrosion resistance, and strong hardness which provides an easy manufacture and prevents deformations effectively.

In this embodiment, the connecting nut 1 is a nut made of copper or zinc alloy and comes with a thread for connection and has the function of fixing an external part. Wherein, copper provides better properties but incurs a higher cost, and zinc alloy provides slightly lower properties but incurs a lower cost.

In this embodiment, the sealing washer 2 is a rubber sealing washer or a plastic sealing washer, and both rubber and plastic sealing washers have the water sealing effect and the function of fixing an external part. The rubber sealing washer has the features of higher deformation ability but shorter service time and easier crack and ageing; and the plastic sealing washer has the features of lower deformation ability but longer service time.

In this embodiment, the main body 3 generally comes with a wall thickness from 0.3mm to 1.5mm to meet different consumer requirements, wherein the thickness of 0.3mm is applicable for constructions and low-cost renovation; the thickness of 0.7mm is applicable for construction and mid-cost renovation; and the thickness of 1.5mm is applicable for mid- and high-end consumers.

In this embodiment, the main body 3 has an external diameter from 1 inch to 4.5 inches which is applicable for connecting various types of sewer pipes: The diameter of 32mm (or 1-1/4 inch) is applicable for washbasins, sinks, tubs and toilets; the diameter of 38mm (or 1-1/2 inch) is applicable for kitchen double-sink sewer pipes, kitchen single-sink sewer pipes, and mop pools; and the diameter of 50.8mm (2 inches) is applicable for public pipeline sewer pipes and floor drain pipes.

In this embodiment, the main body 3 is made of a plastic material. Wherein, a mold matched with the main body 3 is prepared, and a plastic injection molding machine is used for a single-shot molding, and the main body 3 made of a metal material can be integrally formed by mold casting.

With reference to FIG. 3 for a flow chart of a manufacturing process of a one-piece P-trap, the metal main body 3 is manufactured by the following process:
(a) Prepare a metal pipe with a sectional dimension corresponding to the main body, and cut a section of the metal pipe required for manufacturing the main body and used as the material of the main body.
(b) Use the material of the main body of the step (a) for annealing.
(c) Anneal a water outlet made of the material of the main body for milling after annealing.
(d) Bend the material of the main body to an angle *α* after the step (c) takes place to form a structure of an obtuse angle elbow, and then bend the material of the main body to an angle *β* to form a structure of an acute angle elbow while forming a structure of an level tube.
(f) Expand an opening of a water inlet made of the material of the main body after the step (d), and then shrink the opening of the water inlet, and mill the water inlet, and finally rivet the water inlet to form a structure of a vertical tube.

In FIG. 2, a conventional P-trap comprises a connecting nut 1', a sealing washer 2', a main body 3' and a decorative cover 4', wherein the main body 3' comprises a front body 31', a rear body 32' and a connecting member 33'; the front body 31' comprises a vertical tube 311' and an obtuse angle elbow 312' integrally coupled to one another, and the vertical tube 311' and the obtuse angle elbow 312' are intersected at a junction; the rear body 32' comprises an acute angle elbow 321' and a level tube 322' integrally coupled to one another, and the acute angle elbow 321' and the level tube 322' are intersected at a junction; and the obtuse angle elbow 312' and the acute angle elbow 321' are fixed and coupled through a connecting member 33'; and the connecting member 33' comprises a second sealing washer 331' and a second connecting nut 332'.

In FIG. 4, the main body 3' of a conventional P-trap is manufactured by the following process: Firstly, a metal pipe is fed and cut into a raw material of the front body 31' and a raw material of the rear body 32'; after the material of the front body 31' is annealed, the front body 31' is bent with an angle *α*, and then both ends of the front body 31' are processed sequentially by a milling-opening expansion - opening shrinkage - milling - riveting process to complete the manufacture of the front body 31'. In the meantime, an end milling is carried out after the material of the rear body 32' is annealed, and the front end of the rear body 32' is bent with an angle *β*, and then the bent end is milled and processed by a multi-station edge stamping to complete the manufacture of the rear body 32'.

Wherein, the main body 3' of the conventional P-trap is divided into a J-bend (which is a front body 31') and a P-trap (which is a rear body 32'), wherein the J-bend relates to a ring pressing process and a compressing status of the expanding the pipe diameter by mold stamping and producing worms (wherein a tensile force acting towards the center of the worm and an expansion force acting towards the outside of the pipe maintains a fixed locking status. The P-trap relates to the edge stamping process and the process of fixing the distance in the mold (edge stamping distance), so that the mold is pressed to produce a deformation of the product. The J-bend has a long-head pressing ring and a short-head pressing ring, wherein the short-head ring pressing process often has a problem of pressing with a too large force by the machine, cracking or expanding the screw ring, and resulting in a failure of installing the nut, or a problem of pressing with a too small force, so that the screw ring cannot be fixed securely and thus leading to slippery gear. The P-trap with a stamped edge structure is affected by the stamping force of the mold and the remaining length of the bend and the fixed distance in the mold. If the stamping force for stamping the edge is too large, then the structure will be cracked easily. If the stamping force for stamping the edge is too small, the produce will not be able to be manufactured to position or matched with the J-bend. When the remaining length of the bend is too long, the fixed-distance for stamped edge structure in the mold may deform the pipe easily. Although the remaining length is too short, the product does not seem to have any defect, yet the washer cannot be installed and the sealing effect cannot meet user requirements.

Compared with the manufacturing process of a conventional P-trap, the manufacturing process of a one-piece P-trap of the present invention skips several manufacturing steps to reduce the manufacturing time and labor effectively and also omits some manufacturing mold to save time, labor, and production cost and improve the production efficiency effectively. In addition, the present invention does not have the issue of an unstable structure at the bend of the rear body, so as to avoid the situation of unable to install the connecting nut 332'.

In FIG. 5, the one-piece P-trap of the present invention is packaged according to the following procedure: The main body 3 is matched and assembled with the connecting nut 1 and the sealing washer 2, and the whole is packaged in a bag and then into a carton. In FIG. 6, the conventional P-trap is packaged according to the following procedure: two connecting nuts and sealing washers are assembled to the front body 31', and the rear body 32' is directly and independently packaged, and all of the aforementioned components are packaged into a carton. Compared with the packaging process of the conventional P-trap, the packaging process of the one-piece P-trap of the present invention saves the packaging material and packaging time to lower the labor and packaging costs which are helpful to sales.

In FIG. 7, the one-piece P-trap of the present invention is installed according to the following steps: Separate the connecting nut 1 and the sealing washer 2 from the main body 3, and connect the sewer pipe by the connecting nut 1, and connect the sealing washer 2 to the water inlet of the main body 3 to complete the installation.

In FIG. 8, the conventional P-trap is installed according to the following steps: Read instruction carefully. Separate two connecting nuts and the sealing washer from the front body 31', and then assembly the front body 31' and rear body 32' into a whole main body 3' by using a second sealing washer 331' and a second connecting nut 332', and then use a connecting nut 1' to connect a sewer pipe and a sealing washer 2' to connect a water inlet of the main body 3, so as to complete the installation. In the comparison between the installation of the one-piece P-trap of the present invention and the installation of the conventional P-trap, the product of the one-piece P-trap of the invention itself has intuitiveness for the installation, so that users do not need any instruction 9 (such as a product specification, a user guide or an actual installation drawing) or any professional plumbers for the installation, and any ordinary user can do it yourself. The one-piece P-trap can be installed easily and conveniently.

Compared with the conventional P-trap, the one-piece P-trap of the present invention has the following advantages:
1. As to factory production, this invention features a simple manufacturing process, a flexible product structure, a less human resource requirement, and a lower production cost.
2. As to product structure, the one-piece P-trap may be manufactured by different materials, different pipe diameters, or different wall thicknesses, and the product has a good intuitiveness for the installation.
3. As to product packaging, the one-piece P-trap consumes less material, accessory, and labor.
4. As to marketing, the one-piece P-trop has diversified models, hard quality, and low price.
5. As to users, the installation is simple and can be completed independently, and the replacement is convenient.

While the invention has been described by means of specific embodiments, numerous modifications and variations could be made thereto by those skilled in the art without departing from the scope of the invention set forth in the claims.

## Claims

1. A manufacturing process of a one-piece P-trap, **characterized in** comprising the steps of:
(a) preparing a metal pipe with a sectional dimension corresponding to a main body (3) of the one-piece P-trap to be manufactured, and cutting a section of the metal pipe required for manufacturing the main body (3) and used as the material of the main body;
(b) using the material of the main body of the step (a) for annealing;
(c) annealing a water outlet made of the material of the main body for milling after annealing;
(d) bending the material of the main body to an angle *α* after the step (c) takes place to form a structure of an obtuse angle elbow (312), and then bending the material of the main body to an angle *β* to form a structure of an acute angle elbow (321) while forming a structure of an level tube (322);
(f) expanding an opening of a water inlet made of the material of the main body after the step (d), and then shrinking the opening of the water inlet, and milling the water inlet, and finally riveting the water inlet to form a structure of a vertical tube (311);
the resulting one-piece P-trap thus comprising a front body (31) and a rear body (32) integrally coupled to one another; the front body (31) comprising the vertical tube (311) and the obtuse angle elbow (312) integrally coupled to one another; the vertical tube (311) and the obtuse angle elbow (312) being intersected at a junction; the rear body (32) comprising the acute angle elbow (321) and the level tube (322) integrally coupled to one another; the acute angle elbow (321) and the level tube (322) being intersected at a junction; the obtuse angle elbow (312) and the acute angle elbow (321) being intersected at a junction; the front body (31) and the rear body (32) constituting the whole main body (3); and the main body (3) having the water inlet disposed at the top of the vertical tube (311) and the water outlet disposed at an end of the level tube (322).

2. The manufacturing process of the one-piece P-trap of claim 1, wherein the obtuse angle elbow (312) has a bending angle α, and 135° ≤ α ≤ 180°; and the acute angle elbow (321) has a bending angle β, and 45° ≤ β ≤ 90°.

3. The manufacturing process of the one-piece P-trap of claim 2, wherein *α*= *β*+90°.

4. The manufacturing process of the one-piece P-trap of claim 2, wherein *α* =180°, and *β*=90°.

5. The manufacturing process of the one-piece P-trap of claim 1, wherein the bending angle of the obtuse angle elbow (312) and the bending angle of the acute angle elbow (321) are disposed on the same plane.

6. The manufacturing process of the one-piece P-trap of claim 1, further comprising a decorative cover (4) axially matched and sheathed on the level tube (322).

7. A one-piece P-trap **characterized in that** it is manufactured according to any of the previous claims 1 to 6.

## Patentansprüche

1. Herstellungsverfahren eines einteiligen Röhrensiphons, **dadurch gekennzeichnet, dass** es die folgenden Schritte umfasst:
(a) Vorbereiten eines Metallrohres mit einer Querschnittsabmessung, die einem Hauptkörper (3) des herzustellenden einteiligen Röhrensiphons entspricht, und Schneiden eines Abschnittes des Metallrohres, der zum Herstellen des Hauptkörpers (3) erforderlich ist und als Material des Hauptkörpers verwendet wird;
(b) Verwenden des Materials des Hauptkörpers aus Schritt (a) zum Glühen;
(c) Glühen eines Wasserauslasses, der aus dem Material des Hauptkörpers gefertigt ist, zum Fräsen nach dem Glühen;
(d) Biegen des Materials des Hauptkörpers zu einem Winkel *α*, nachdem Schritt (c) stattfindet, um eine Struktur eines stumpfwinkligen Rohrbogens (312) zu bilden, und dann Biegen des Materials des Hauptkörpers zu einem Winkel *β*, um eine Struktur eines spitzwinkligen Rohrbogens (321) zu bilden, während eine Struktur eines Füllstandsrohres (322) gebildet wird;
(f) Erweitern einer Öffnung eines Wassereinlasses, der aus dem Material des Hauptkörpers gefertigt ist, nach dem Schritt (d), und dann Schrumpfen der Öffnung des Wassereinlasses und Fräsen des Wassereinlasses und schließlich Nieten des Wassereinlasses, um eine Struktur eines vertikalen Rohres (311) zu bilden;
wobei der resultierende einteilige Röhrensiphon somit einen vorderen Körper (31) und einen hinteren Körper (32) umfasst, die einstückig aneinander gekoppelt sind; wobei der vordere Körper (31) das vertikale Rohr (311) und den stumpfwinkligen Rohrbogen (312) umfasst, die einstückig aneinander gekoppelt sind; wobei sich das vertikale Rohr (311) und der stumpfwinklige Rohrbogen (312) an einer Verbindungsstelle schneiden; wobei der hintere Körper (32) den spitzwinkligen Rohrbogen (321) und das Füllstandsrohr (322) umfasst, die einstückig aneinander gekoppelt sind; wobei sich der spitzwinklige Rohrbogen (321) und das Füllstandsrohr (322) an einer Verbindungsstelle schneiden; wobei sich der stumpfwinklige Rohrbogen (312) und der spitzwinklige Rohrbogen (321) an einer Verbindungsstelle schneiden; wobei der vordere Körper (31) und der hintere Körper (32) den gesamten Hauptkörper (3) bilden; und wobei der Hauptkörper (3) den Wassereinlass, der an der Oberseite des vertikalen Rohres (311) angeordnet ist, und den Wasserauslass aufweist, der an einem Ende des Füllstandsrohres (322) angeordnet ist.

2. Herstellungsverfahren des einteiligen Röhrensiphons nach Anspruch 1, wobei der stumpfwinklige Rohrbogen (312) einen Biegewinkel α aufweist und 135 ° ≤ α ≤ 180 °; und der spitzwinklige Rohrbogen (321) einen Biegewinkel β aufweist und 45 ° ≤ β ≤ 90 °.

3. Herstellungsverfahren des einteiligen Röhrensiphons nach Anspruch 2, wobei *α* = *β* + 90 °.

4. Herstellungsverfahren des einteiligen Röhrensiphons nach Anspruch 2, wobei *α* = 180 ° und *β* = 90°.

5. Herstellungsverfahren des einteiligen Röhrensiphons nach Anspruch 1, wobei der Biegewinkel des stumpfwinkligen Rohrbogens (312) und der Biegewinkel des spitzwinkligen Rohrbogens (321) auf der gleichen Ebene angeordnet sind.

6. Herstellungsverfahren des einteiligen Röhrensiphons nach Anspruch 1, ferner umfassend eine dekorative Abdeckung (4), die axial zu dem Füllstandsohr (322) passt und dieses ummantelt.

7. Einteiliger Röhrensiphon, **dadurch gekennzeichnet, dass** er nach einem der vorhergehenden Ansprüche 1 bis 6 hergestellt ist.

## Revendications

1. Procédé de fabrication d'un siphon en P monobloc, **caractérisé en ce qu'**il comprend les étapes de :
(a) préparation d'un tuyau métallique avec une dimension de section correspondant à un corps principal (3) du siphon en P monobloc à fabriquer, et découpe d'une section du tuyau métallique nécessaire à la fabrication du corps principal (3) et utilisé en tant que matériau du corps principal ;
(b) utilisation du matériau du corps principal de l'étape (a) pour le recuit ;
(c) recuit d'une sortie d'eau constituée du matériau du corps principal pour le fraisage après recuit ;
(d) pliage du matériau du corps principal à un angle α après que l'étape (c) a eu lieu pour former une structure d'un coude à angle obtus (312), et ensuite pliage du matériau du corps principal à un angle β pour former une structure d'un coude à angle aigu (321) tout en formant une structure d'un tube de niveau (322) ;
(f) élargissement d'une ouverture d'une entrée d'eau constituée du matériau du corps principal après l'étape (d), et ensuite rétrécissement de l'ouverture de l'entrée d'eau, et fraisage de l'entrée d'eau, et enfin rivetage de l'entrée d'eau pour former une structure d'un tube vertical (311) ;
le siphon en P monobloc résultant comprenant ainsi un corps avant (31) et un corps arrière (32) couplés intégralement l'un à l'autre ; le corps avant (31) comprenant le tube vertical (311) et le coude à angle obtus (312) couplés intégralement l'un à l'autre ; le tube vertical (311) et le coude à angle obtus (312) se croisant au niveau d'une jonction ; le corps arrière (32) comprenant le coude à angle aigu (321) et le tube de niveau (322) couplés intégralement l'un à l'autre ; le coude à angle aigu (321) et le tube de niveau (322) se croisant au niveau d'une jonction ; le coude à angle obtus (312) et le coude à angle aigu (321) se croisant au niveau d'une jonction ; le corps avant (31) et le corps arrière (32) constituant l'ensemble du corps principal (3) ; et le corps principal (3) possédant l'entrée d'eau disposée au niveau du sommet du tube vertical (311) et la sortie d'eau disposée au niveau d'une extrémité du tube de niveau (322).

2. Procédé de fabrication du siphon en P monobloc selon la revendication 1, ledit coude à angle obtus (312) possédant un angle de courbure a, et 135° ≤ α ≤ 180° ; et ledit coude à angle aigu (321) possédant un angle de flexion β, et 45° ≤ β ≤ 90°.

3. Procédé de fabrication du siphon en P monobloc selon la revendication 2, dans lequel a = *β* +90°.

4. Procédé de fabrication du siphon en P monobloc selon la revendication 2, dans lequel a = 180° et *β* = 90°.

5. Procédé de fabrication du siphon en P monobloc selon la revendication 1, ledit angle de flexion du coude à angle obtus (312) et ledit angle de flexion du coude à angle aigu (321) étant disposés sur le même plan.

6. Procédé de fabrication du siphon en P monobloc selon la revendication 1, comprenant en outre un couvercle décoratif (4) adapté axialement et gainé sur le tube de niveau (322).

7. Siphon en P monobloc **caractérisé en ce qu'** il est fabriqué selon l'une quelconque des revendications 1 à 6 précédentes.
